Europäisches Patentamt

European Patent Office

Office européen des brevets

(19)

(11) Veröffentlichungsnummer: **0 291 497**
**B1**

(12) **EUROPÄISCHE PATENTSCHRIFT**

(45) Veröffentlichungstag der Patentschrift: 06.02.91

(21) Anmeldenummer: 88890112.1

(22) Anmeldetag: 09.05.88

(51) Int. Cl.⁵: **F 27 B 3/16,** F 27 D 1/18, C 21 C 5/52

(54) Elektroofen, wie Lichtbogenofen oder Plasmaofen.

(30) Priorität: 15.05.87 AT 1234/87

(43) Veröffentlichungstag der Anmeldung:
17.11.88 Patentblatt 88/46

(45) Bekanntmachung des Hinweises auf die
Patenterteilung:
06.02.91 Patentblatt 91/06

(84) Benannte Vertragsstaaten:
CH DE ES FR GB IT LI SE

(56) Entgegenhaltungen:
BE-A- 664 254
DE-A-1 508 471
DE-C- 750 015
DE-C-1 216 900

(73) Patentinhaber: VOEST-ALPINE
INDUSTRIEANLAGENBAU GESELLSCHAFT
m.b.H.
Turmstrasse 44
A-4020 Linz (AT)

(72) Erfinder: Zajicek, Ernst
Donaulände 10
A-4100 Ottensheim (AT)
Erfinder: Riegler, Ernst
Gröllerstrasse 5
A-4470 Enns (AT)
Erfinder: Hammerschmid, Hubert
Lüfteneggerstrasse 11
A-4020 Linz (AT)

(74) Vertreter: Wolfram, Gustav, Dipl.-Ing.
Schwindgasse 7 P.O. Box 205
A-1041 Wien (AT)

Courier Press, Leamington Spa, England.

## Beschreibung

Die Erfindung betrifft einen Elektroofen, wie Lichtbogenofen oder Plasmaofen, mit einem Ofengefäß, das von einem mittels eines Deckelhubwerkes heb- und senkbaren und mittels eines Deckelschwenkwerkes von einer Stellung über dem Ofengefäß in eine Stellung seitlich des Ofengefäßes und zurück schwenkbaren Ofendeckel bedeckt ist, wobei zum Heben, Senken und Schwenken des Ofendeckels ein seitlich des Ofengefäßes schwenkbar gelagertes Deckeltragwerk mit mindestens einem über das Ofengefäß ragenden Deckeltragarm vorgesehen ist.

Ein Elektroofen dieser Art ist in der DE—A—1 508 471 und der DE—B—1 216 900 beschrieben. Der Ofendeckel hängt bei den bekannten Elektroöfen an Zugstangen, die einerseits an am Ofendeckel und andererseits an am Deckeltragarm angeordneten Winkelhebeln angelenkt sind, wobei die Winkelhebel über ein mittels eines Druckmittelzylinders betätigbares Gestänge schwenkbar sind, wodurch die Zugstangen und damit der Ofendeckel gehoben bzw. gesenkt werden. Mit Einrichtungen dieser Art läßt sich der Ofendeckel in vertikaler Richtung bewegen und in angehobenem Zustand in eine Position seitlich des Gefäßes bzw. retour verschwenken.

Schwierigkeiten ergeben sich, wenn der Ofendeckel freigestellt werden soll, z.B. zwecks Austauschens des Ofendeckels. In diesem Fall muß bei den bekannten Anlagen Bedienungspersonal die am Ofendeckel angeordneten Anlenkstellen der Zugstangen lösen, so daß die Deckeltragarme ohne Ofendeckel in eine den Ofendeckel freigebende, seitlich des Gefäßes liegende Position verschwenkt werden können. Solche Manipulationen auf dem Ofengefäß sind nicht nur umständlich, sondern auch für das Bedienungspersonal mit Gefahren verbunden.

Besondere Schwierigkeiten ergeben sich weiters, wenn am Ofendeckel ein Rauchgaskrümmer vorgesehen ist, da dieser dann ebenfalls vom Bedienungspersonal vom Ofendeckel gelöst werden muß, um ein Verschwenken der Deckeltragarme ohne Ofendeckel zu ermöglichen.

Die Erfindung bezweckt die Vermeidung dieser Nachteile und Schwierigkeiten und stellt sich die Aufgabe, einen Elektroofen der eingangs beschriebenen Art derart auszubilden, daß ein Verschwenken der Deckeltragarme wahlweise mit oder ohne Ofendeckel durchführbar ist, ohne Manipulationen des Bedienungspersonales am Ofendeckel zu erfordern.

Diese Aufgabe wird erfindungsgemäß dadurch gelöst, daß der Deckeltragarm mit dem Ofendeckel mittels mindestens einer Kupplungseinrichtung lösbar verbunden ist, wobei ein Kupplungsstück der Kupplungseinrichtung an dem Deckeltragarm und ein Kupplungsgegenstück der Kupplungseinrichtung an dem Ofendeckel angeordnet ist und wobei das Kupplungsstück oder das Kupplungsgegenstück eine in Schwenkrichtung des Deckeltragwerkes gerichtete Seitenausnehmung, durch die das Kupplungsgegenstück mit dem Kupplungsstück von der Seite her zusammenfügbar ist, aufweist.

Vorzugsweise sind das Kupplungsstück als Teil des Deckelhubwerkes und als am Deckeltragarm vertikal bewegbar gelagerte Deckeltragstange, die an ihrem freien Ende mit einer Deckelhubplatte versehen ist, und das Kupplungsgegenstück als am Ofendeckel starr angeordnete Tragplatte mit einer Durchtrittsöffnung für die Deckeltragstange ausgebildet, wobei die Tragplatte mit der zur Durchtrittsöffnung reichenden Seitenausnehmung versehen ist.

Gemäß einer weiteren Aufgabe der Erfindung soll auch bei einem am Ofendeckel angeordneten Rauchgaskrümmer ein Verschwenken der Tragarme ohne Ofendeckel möglich sein, ohne daß eine Behinderung durch den Rauchgaskrümmer gegeben ist. Diese weitere Aufgabe wird zweckmäßig dadurch gelöst, daß am Deckeltragwerk zwei Deckeltragarme vorgesehen sind, an deren Enden eine einen Rauchgaskrümmer tragende Quertraverse absetzbar ist, die mittels jeweils an ihren Enden angeordneter Druckmittelzylinder des Deckelhubwerkes in vertikaler Richtung bewegbar ist, wobei die die Deckeltragstangen tragenden Kolbenstangen jedes Druckmittelzylinders mit der Quertraverse verbunden sind.

Vorteilhaft ist die Quertraverse an ihren Enden jeweils mit einer vertikal ausgerichteten Stütze verbunden, die jeweils an einem Deckeltragarm in vertikaler Richtung geführt ist, vorzugsweise mittels Führungsrollen.

Um beim Verschwenken des Ofendeckels Schwingungen zu vermeiden, ist zweckmäßig am Deckeltragarm eine in Hubrichtung des Ofendeckels der Tragplatte gegenüberliegende Gegenstützfläche angeordnet, gegen die die Tragplatte bei angehobenem Ofendeckel preßbar ist, wobei vorteilhaft die Tragplatte eine die Gegenstützfläche bei angehobenem Ofendeckel aufnehmende Ausnehmung aufweist.

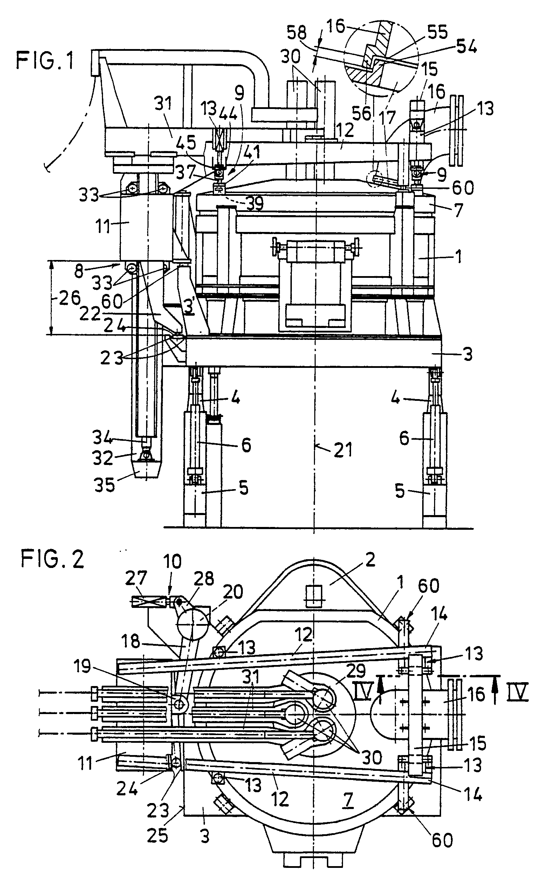

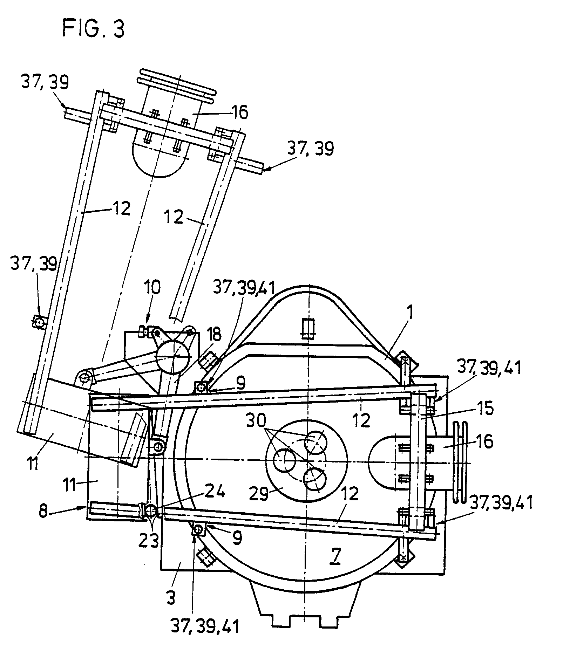

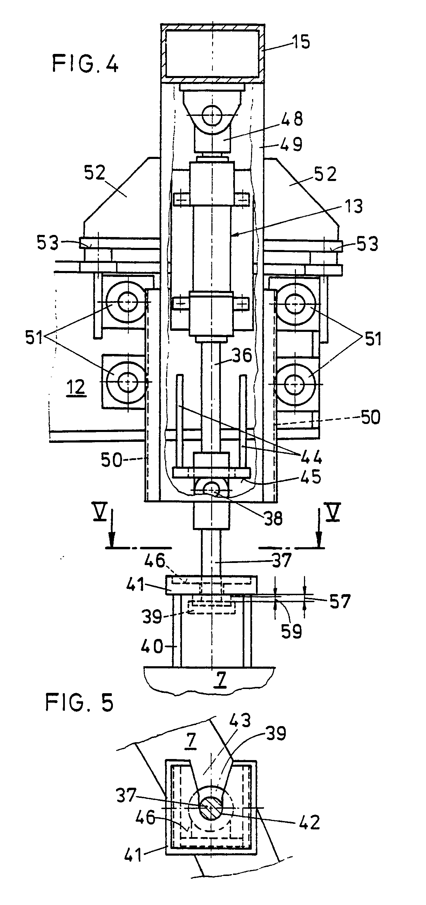

Die Erfindung ist nachfolgend an einem Ausführungsbeispiel anhand der Zeichnung näher erläutert, wobei Fig. 1 eine Seitenansicht eines Elektroofens und Fig. 2 eine Draufsicht auf den Elektroofen zeigen. In Fig. 3 ist in zu Fig. 2 analoger Darstellung das Verschwenken der Deckeltragarme ohne Ofendeckel veranschlaulicht. Fig. 4 zeigt eine teilweise geschnittene Detailansicht gemäß Pfeil IV der Fig. 2. Fig. 5 stellt eine Schnittdarstellung gemäß der Linie V—V der Fig. 4 dar.

Ein Ofengefäß 1 eines Elektrolichtbogenofens mit exzentrischem Bodenabstich 2 ruht auf einem Wiegerahmen 3, der auf Wälzbahnen 4, die am oberen Ende von am Fundament angeordneten Betonwangen 5 angeordnet sind, gelagert ist. Zum Kippen des Ofengefäßes 1 dienen einerseits an den Betonwangen 5 und andererseits am Wiegerahmen 3 angeordnete Druckmittelzylinder 6.

Das Ofengefäß 1 ist während des Betriebes des Ofens von einem wassergekühlten Ofendeckel 7 bedeckt. Dieser Ofendeckel 7 ist mittels eines Deckeltragwerkes 8 heb- und senkbar sowie schwenkbar, wobei das Deckeltragwerk 8 mit einem Deckelhubwerk 9 zum Heben und Senken des Ofendeckels 7 ausgestattet ist und ein Deckelschwenkwerk 10 zum Schwenken des Ofendeckels 7 von einer Betriebsstellung oberhalb des Ofengefäßes 1 in eine seitlich des Ofengefäßes 1 liegende Chargierstellung bzw. retour vorgesehen ist.

Das Deckeltragwerk 8 weist einen Tragwerkkasten 11 auf, an dessen Oberseite zwei über den Ofendeckel 7 ragende Deckeltragarme 12 befestigt sind. Zwischen den Deckeltragarmen 12 und dem Ofendeckel 7 sind an vier Stellen Druckmittelzylinder 13 angeordnet, die das Deckelhubwerk 9 bilden. Auf den auskragenden Enden 14 der Deckeltragarme 12 ist mittels einer Quertraverse 15 ein Rauchgaskrümmer 16, der an eine Abzugsöffnung 17 des Ofendeckels 7 anschließt, abstützbar.

Der Tragwerkkasten 11 ist als Koppel einer Schubschwinge ausgebildet, deren Schwinge 18 mit einem Ende an einem am Tragwerkkasten 11 in Richtung zum Ofengefäß 1 auskragenden Arm 19 angelenkt und mit ihrem anderen Ende an einer am Wiegerahmen 3 starr montierten Säule 20, die etwa parallel zur Ofenmittelachse 21 gerichtet ist, schwenkbar gelagert ist. Am Tragwerkkasten 11 ist weiters ein Führungsarm 22 starr befestigt, an dessen frei auskragendem Ende ein in eine am Wiegerahmen 3 angeordnete Führung 23 eingreifender Mitnehmer 24, der z.B. als Rolle ausgebildet ist, montiert ist. Die Führung 23 ist vorzugsweise geradlinig ausgebildet und erstreckt sich etwa parallel oder im spitzen Winkel zu der Seite 25 des rechteckig ausgebildeten Wiegerahmens 3, an der das Deckeltragwerk 8 angeordnet ist. Die Führung 23 und der Mitnehmer 24 liegen etwa in Höhe des Wiegerahmens 3. Da der Tragwerkkasten 11 oberhalb des Wiegerahmens 3 angeordnet ist, weisen sowohl der Führungsarm 22 als auch die Schwinge 18 eine vom Wiegerahmen 3 bis zum Tragwerkkasten 11 reichende vertikale Erstreckung 26 auf.

Zum Verschwenken des Ofendeckels 7 ist die Schwinge 18 mittels eines Druckmittelzylinders 27 um die Säule 20 verschwenkbar, wobei der Druckmittelzylinder 27 einerseits am Wiegerahmen 3 und andererseits an einem Fortsatz 28 der Schwinge 18 angereift.

Die durch das im Zentrum des Ofendeckels 7 angeordnete Deckelherz 29 geführten Elektroden 30 sind von Elektrodentragarmen 31 gehalten, die von den Elektroden 30 in Richtung zum Tragwerkkasten 11 gerichtet sind und mit vertikalen Stützen 32 durch den Tragwerkkasten 11 hindurchragen. Zur Führung dieser Stützen 32 sind an der Ober- und Unterseite des Tragwerkkastens 11 Führungsrollen 33 angeordnet. Das Heben und Senken der Elektroden 30 wird mittels Druckmittelzylinder 34 bewerkstelligt, die innerhalb der Stützen 32 angeordnet sind und mit ihren nach außen ragenden Enden an einem am Tragwerkkasten 11 angesetzten, nach unten gerichteten U-förmigen Bügel 35 angreifen.

Die das Deckelhubwerk 9 bildenden Druckmittelzylinder 13 sind jeweils an den Deckeltragarmen 12 starr befestigt. An den nach unten gerichteten Kolbenstangen 36 sind jeweils Deckeltragstangen 37 gelenkig befestigt, so daß Fertigungsungenauigkeiten bzw. Dehnungsänderungen des Ofendeckels 7 etc. ausgeglichen werden können. Die Gelenkachse 38 der Anlenkung der Deckeltragstangen 37 ist horizontal und etwa senkrecht zur Längserstreckung der Deckeltragarme 12 gerichtet.

Am unteren Ende jeder Deckeltragstange 37 ist eine Deckelhubplatte 39 vorgesehen. Die Deckeltragstange 37 bildet mit der Deckelhubplatte 39 ein Kupplungsstück, welches mit einem am Ofendeckel angeordneten Kupplungsgegenstück, welches von einer Konsole 40 mit etwa horizontal angeordneter Tragplatte 41 gebildet ist, durch Verschwenken der Deckeltragarme 12 in und außer Eingriff bringbar ist. Das Kupplungsgegenstück, d.h. die Tragplatte 41, weist zum In- und Außer-Eingriff-Bringen des Kupplungsstückes eine von einer zentralen Durchtrittsöffnung 42 ausgehende, in Schwenkrichtung der Deckeltragarme 12 (d.h. wenn die Deckeltragarme 12 von über den Ofendeckel 7 in eine Position seitlich neben dem Ofendeckel 7 geschwenkt werden) gerichtete Seitenausnehmung 43 auf, die sich nach außen konisch erweiternd ausgebildet ist.

An den Deckeltragarmen 12 ist jeweils konzentrisch zur Achse des Druckmittelzylinders 13 eine an einer Konsole 44-angeordnete, parallel zur Tragplatte 41 ausgerichtete Gegenstützfläche 45 angeordnet, durch die die Kolbenstange 36 hindurchbewegbar ist und an die die Tragplatte 41 der am Ofendeckel 7 befestigten Konsole 40 bei angehobenem Ofendeckel 7 anpreßbar ist. Zur besseren Zentrierung des Ofendeckels 7 in angehobenem Zustand sind zwei der Tragplatten 41 an ihrer Oberseite mit einer an die Gegenstützfläche 45 angepaßten und die Gegenstützfläche bei angehobenem Ofendeckel aufnehmenden Ausnehmung 46 versehen. Hierdurch kann der Ofendeckel 7 im angehobenen Zustand ohne die Gefahr eines Schwingens bzw. Schrägstellens, verursacht durch Aufgleiten auf im Ofengefäß 1 chargierten Schrott, mit Hilfe der Deckeltragarme 12 vom Ofengefäß 1 weg- und zu diesem zurückgeschwenkt werden.

Die beiden an den Enden 14 der zwei Deckeltragarme 12 angeordneten Druckmittelzylinder 13, die in Fig. 4 näher dargestellt sind, sind mit einer durchgehenden Kolbenstange 36 ausgestattet, deren oberes, aus dem Druckmittelzylinder 13 herausragendes Ende 48 an der Quertraverse 15 angelenkt ist. Die Quertraverse 15 weist an ihren Enden jeweils sich vertikal nach unten erstreckende Stützen 49 auf, die mit Führungsschienen 50 an den Enden 14 der Deckeltragarme 12 angeordneten Führungsrollen 51 geführt sind.

Zur Abstützung der Quertraverse 15 an den Deckeltragarmen 12 sind an den vertikal nach unten gerichteten Stützen 49 seitlich auskragende Konsolen 52 vorgesehen, die an Stützflächen 53 der Deckeltragarme 12 aufliegen, sobald die Quertraverse 15 ihre unterste Lage erreicht hat, d.h. wenn sich der Rauchgaskrümmer 16 in Betriebsposition befindet. In dieser Position ist zwar zwischen dem Rauchgaskrümmer 16 und einer am Ofendeckel 7 um die Abzugsöffnung 17 angeordneten Leiste 54 ein sich in vertikaler Richtung erstreckender Spalt 55 vorgesehen, der jedoch durch einen seitlich am Rauchgaskrümmer 16 angeordneten Kragen 56 verdeckt ist, um das Herausschlagen von Abgasflammen während des Betriebes des Ofens zu verhindern.

Bei am Ofengefäß 1 aufgesetztem Ofendeckel 7 befinden sich die Deckelhubplatten 39 in einem Abstand 57 unterhalb der Tragplatte 41, der größer bemessen ist als die Höhe 58 des den Spalt 55 zwischen Rauchgaskrümmer 16 und Abzugsöffnung 17 überdeckenden Kragens 56, so daß durch Bewegen der Kolbenstangen 36 der an den Enden 14 der Tragarme 12 angeordneten Druckmittelzylinder 13 um ein Maß 59, welches geringfügig größer ist als die Höhe 58 dieses Kragens 56, der Rauchgaskrümmer 16 durch Anheben der Quertraverse 15 vom Ofendeckel 7 freigestellt ist, ohne daß jedoch die Deckelhubplatte 39 mit der Tragplatte 41 bereits in Kontakt gelangt ist.

Zur Abstützung der Deckeltragarme 12 bei am Ofengefäß 1 aufgesetztem Ofendeckel 7 dienen als Druckmittelzylinder ausgebildete Stellglieder 60, von denen zwei zwischen dem Ofengefäß und den Enden 14 der Tragarme 12 und eines zwischen dem Tragwerkkasten 11 und einer am Wiegerahmen 3 angeordneten, vertikal nach oben ragenden Stütze 3' angeordnet sind.

Soll der Ofendeckel 7 vom Ofengefäß 1 entfernt werden, z.B. um ihn gegen einen intakten Ofendeckel auszutauschen, wird die folgt vorgegangen:

Zunächst werden die Stellglieder 60 entlastet, wodurch die Deckeltragarme 12 gegenüber dem Ofengefäß 1 freigestellt sind. Sodann werden nach Hochfahren oder Entfernen der Elektroden 30 die an den Enden der Deckeltragarme 12 angeordneten Druckmittelzylinder 13 soweit beaufschlagt, daß die Kolbenstangen 36 und damit der Querträger 15 mit dem an ihm befestigten Rauchgaskrümmer 16 um das Maß 59 angehoben wird. Die beiden anderen Druckmittelzylinder 13 bleiben entlastet. Hierdurch ist das Deckeltragwerk 8 in die in Fig. 3 dargestellte, bei Blickrichtung von oben seitlich neben dem Ofengefäß 1 befindliche Position unter Mitnahme des Rauchgaskrümmers 16 verschwenkbar. Hierbei gleiten die Deckeltragstangen 37 durch die Seitenausnehmungen 43 selbsttätig nach außen, so daß der Ofendeckel 7 vom Deckeltragwerk entkuppelt ist.

Nach Aufsetzen eines intakten Ofendeckels 7 (bzw. Einsetzen eines neuen Deckelherzes 29) und Zurückschwenken des Deckeltragwerkes 8 gleiten die Deckeltragstangen 37 durch die Seitenausnehmungen 43 der Kupplungsgegenstücke, bis die Deckeltragstangen 37 durch die zentralen Durchtrittsöffnungen 42 der Tragplatte 41 ragen. Durch Beaufschlagen der Druckmittelzylinder 13 ist es dann möglich, den Ofendeckel 7 zu heben bzw. zu senken sowie im gehobenen Zustand durch Schwenken der Deckeltragarme 12 zur Seite zu schwenken.

Die Erfindung beschränkt sich nicht auf das in der Zeichnung dargestellte Ausführungsbeispiel, sondern kann in verschiedener Hinsicht modifiziert werden. Beispielsweise kann die Erfindung auch bei einem Plasmaofen Verwendung finden. Auch für ortsfeste Öfen, also Öfen mit ortsfester, z.B. als Fundament ausgebildeter Ofenplattform, ist die Erfindung einsetzbar. Das Kupplungsstück und das Kupplungsgegenstück können beliebig ausgebildet sein, beispielsweise kann die Deckeltragstange 37 auch am Ofendeckel 7 montiert sein und das Kupplungsgegenstück an der Kolbenstange 36 des Druckmittelzylinders.

Es sind auch andere Varianten für das Kupplungsstück und das Kupplungsgegenstück denkbar. Wesentlich ist, daß diese beiden Teile bei entlastetem bzw. teilentlastetem Deckelhubwerk 9 durch eine seitliche Schwenkbewegung der Deckeltragarme voneinander lösbar bzw. ineinander setzbar sind. Die zum Deckelheben eingesetzten Druckmittelzylinder müssen nicht unbedingt am Deckeltragarm angeordnet sein, sondern sie können auch seitlich des Ofengefäßes vorgesehen sein und über ein Gestänge ein Heben und Senken der Deckeltragstangen oder der Deckeltragarme bewirken.

## Patentansprüche

1. Elektroofen, wie Lichtbogenofen oder Plasmaofen, mit einem Ofengefäß (1), das von einem mittels eines Deckelhubwerkes (9) heb- und senkbaren und mittels eines Deckelschwenkwerkes (10) von einer Stellung über dem Ofengefäß (1) in eine Stellung seitlich des Ofengefäßes (1) und zurück schwenkbaren Ofendeckel (7) bedeckt ist, wobei zum Heben, Senken und Schwenken des Ofendeckels (7) ein seitlich des Ofengefäßes (1) schwenkbar gelagertes Deckeltragwerk (8) mit mindestens einem über das Ofengefäß (1) ragenden Deckeltragarm (12) vorgesehen ist, dadurch gekennzeichnet, daß der Deckeltragarm (12) mit dem Ofendeckel (7) mittels mindestens einer Kupplungseinrichtung lösbar verbunden ist, wobei ein Kupplungsstück (37, 39) der Kupplungseinrichtung an dem Deckeltragarm (12) und ein Kupplungsgegenstück (40, 41) der Kupplungseinrichtung an dem Ofendeckel (7) angeordnet ist und wobei das Kupplungsstück (37, 39) oder das Kupplungsgegenstück (40, 41) eine in Schwenkrichtung des Deckeltragwerkes (8) gerichtete Seitenausnehmung (43), durch die das Kupplungsgegenstück (40, 41) mit dem Kupplungsstück (37, 39) von der Seite her zusammenfügbar ist, aufweist.

2. Elektroofen nach Anspruch 1, dadurch gekennzeichnet, daß das Kupplungsstück als Teil des Deckelhubwerkes (9) und als am Deckeltragarm (12) vertikal bewegbar gelagerte Deckeltragstange (37), die an ihrem freien Ende mit einer Deckelhubplatte (39) versehen ist, und das Kupplungsgegenstück als am Ofendeckel (7) starr angeordnete Tragplatte (41) mit einer Durchtrittsöffnung (42) für die Deckeltragstange (37) ausgebildet sind, wobei die Tragplatte mit der zur Durchtrittsöffnung (42) reichenden Seitenausnehmung (43) versehen ist.

3. Elektroofen nach Anspruch 2, dadurch gekennzeichnet, daß am Deckeltragwerk (8) zwei Deckeltragarme (12) vorgesehen sind, an deren Enden (14) eine einen Rauchgaskrümmer (16) tragende Quertraverse (15) absetzbar ist, die mittels jeweils an ihren Enden angeordneter Druckmittelzylinder (13) des Deckelhubwerkes (9) in vertikaler Richtung bewegbar ist, wobei die die Deckeltragstangen (37) tragenden Kolbenstangen (36) jedes Druckmittelzylinders (13) mit der Quertraverse (15) verbunden sind.

4. Elektroofen nach Anspruch 3, dadurch gekennzeichnet, daß die Quertraverse (15) an ihren Enden jeweils mit einer vertikal ausgerichteten Stütze (49) verbunden ist, die jeweils an einem Deckeltragarm (12) in vertikaler Richtung geführt ist, vorzugsweise mittels Führungsrollen (51).

5. Elektroofen nach einem oder mehreren der Ansprüche 2 bis 4, dadurch gekennzeichnet, daß am Deckeltragarm (12) eine in Hubrichtung des Ofendeckels der Tragplatte (41) gegenüberliegende Gegenstützfläche (45) angeordnet ist, gegen die die Tragplatte (41) bei angehobenem Ofendeckel (7) preßbar ist.

6. Elektroofen nach Anspruch 5, dadurch gekennzeichnet, daß die Tragplatte (41) eine die Gegenstützfläche (45) bei angehobenem Ofendeckel (7) aufnehmende Ausnehmung (46) aufweist.

**Revendications**

1. Four électrique, tel qu'un four à arc électrique ou un four à plasma, avec une cuve de four (1) recouverte d'un couvercle de four (7) pouvant être levé et abaissé au moyen d'un mécanisme de levage du couvercle (9) et pouvant être pivoté par un mécanisme de pivotement du couvercle (10) entre une position au-dessus de la cuve du four (1) et une seconde position sur le côté de la cuve du four (1), et inversement, où il est prévu pour le levage, la descente et le pivotement du couvercle du four (7) un mécanisme porteur de couvercle (8) monté pivotant sur le côté de la cuve du four (1) avec au moins un bras porteur de couvercle (12) en saillie au-dessus de la cuve du four (1), caractérisé en ce le bras porteur du couvercle (12) est relié de manière amovible au couvercle du four (7) par au moins un dispositif de couplage, où un élément de couplage (37, 39) du dispositif de couplage est monté sur le bras porteur du couvercle (12) et un élément de couplage associé (40, 41) du dispositif de couplage sur le couvercle du four (7) et où l'élément de couplage (37, 39) ou l'élément de couplage associé (40, 41) possède une ouverture latérale (43) orientée dans la direction de pivotement du mécanisme porteur du couvercle (8) qui permet d'engrener par le côté l'élément de couplage associé (40, 41) et l'élément de couplage (37, 39).

2. Four électrique selon la revendication 1, caractérisé en ce que l'élément de couplage est conçu comme un élément du mécanisme de levage du couvercle (9) sous la forme d'une tige porteuse du couvercle (37) montée sur le bras porteur du couvercle (12) de manière à pouvoir se déplacer verticalement et portant à son extrémité libre une plaque de levage du couvercle (39) et en ce que l'élément de couplage associé est conçu comme une plaque support (41) solidaire du couvercle du four (7) avec une traversée (42) destinée à recevoir la tige porteuse du couvercle (37), la plaque support portant l'ouverture latérale (43) allant jusqu'à la traversée (42).

3. Four électrique selon la revendication 2, caractérisé en ce que le mécanisme porteur du couvercle (8) possède deux bras porteurs du couvercle (12) aux extrémités (14) desquels est disposée une traverse (15) portant un coude d'évacuation des gaz de fumées (16) et pouvant être déplacée dans la direction verticale au moyen de vérins (13) du mécanisme de levage du couvercle (9) montés à ses extrémités, les tiges de piston (36) de chaque vérin (13) portant les tiges porteuses du couvercle (37) étant reliées à la traverse (15).

4. Four électrique selon la revendication 3, caractérisé en ce que la traverse (15) est reliée à chacune de ses extrémités à un montant (49) orienté verticalement qui est guidé dans la direction verticale sur un bras porteur du couvercle (12), de préférence au moyen de galets de guidage (51).

5. Four électrique selon une ou plusieurs des revendications 2 à 4, caractérisé en ce que le bras porteur du couvercle (12) porte une plaque d'appui (45) opposée à la plaque support (41) dans le sens de levage du couvercle du four, contre laquelle la plaque support (41) peut être appuyée lorsque le couvercle du four (7) est en position haute.

6. Four électrique selon la revendication 5, caractérisé en ce que la plaque support (41) présente un décrochement (46) recevant la plaque d'appui (45) lorsque le couvercle du four (7) est en position haute.

**Claims**

1. Electric furnace, such as electric arc furnace or plasma furnace, with a furnace vessel (1), which is covered by a furnace lid (7) liftable and lowerable by means of a lid lifting mechanism (9) and pivotable by means of a lid pivoting mechanism (10) from a position above the furnace vessel (1) into a position lateral of the furnace vessel (1) and back, a lid supporting framework (8) with at least one lid bracket (12) extending over the furnace vessel (1) being provided, which lid supporting framework is pivotably mounted laterally of the furnace vessel (1) for lifting, lowering and pivoting the furnace lid (7), characterised in that the lid bracket (12) is detachably connected with the furnace lid (7) by means of at least one coupling means, a coupling piece (37, 39) of the coupling means being arranged on the lid bracket (12) and a coupling counter piece (40, 41) of the coupling means being arranged on the furnace lid (7) and the coupling piece (37, 39) or the coupling counter piece (40, 41) having a lateral recess (43) directed in pivoting direction of the lid supporting framework (8), through which recess the coupling counter piece (40, 41) can be put together with the coupling piece (37, 39) from the side.

2. Electric furnace according to claim 1, characterised in that the coupling piece is designed as part of the lid lifting mechanism (9) and as lid carrying rod (37) vertically movably mounted on the lid bracket (12), which lid carrying rod, on the free end thereof, is provided with a lid lifting plate (39), and the coupling counter piece is designed as a supporting plate (41) rigidly arranged on the furnace lid (7) and having a passage opening (42) for the lid carrying rod (37), the supporting plate being provided with the lateral recess (43) reaching as far as to the passage opening (42).

3. Electric furnace according to claim 2, characterised in that two lid brackets (12) are provided on the lid supporting framework (8), on whose ends (14) a transverse beam (15) carrying a fumes bend can be deposited, which is movable in vertical direction by means of pressure medium cylinders (13) of the lid lifting mechanism (9) arranged on the ends thereof, the piston rods (36) of each pressure medium cylinder (13) carrying the lid carrying rods (37) being connected with the transverse beam (15).

4. Electric furnace according to claim 3, characterised in that the transverse beam (15), on the ends thereof, is connected with a vertically oriented standard (49), which is guided each on a lid bracket (12) in vertical direction, preferably by guiding rollers (51).

5. Electric furnace according to one or more of claims 2 to 4, characterised in that, on the lid bracket (12), a counter supporting surface (45) lying opposite the supporting plate (41) in the lifting direction of the furnace lid is arranged, against which the supporting plate (41) can be pressed when the furnace lid (7) is lifted.

6. Electric furnace according to claim 5, characterised in that the supporting plate (41) includes a recess (46) to accommodate the counter supporting surface (45) when the furnace lid (7) is lifted.

FIG.1

FIG.2

FIG. 3

FIG. 4

FIG. 5